# EUROPÄISCHE PATENTSCHRIFT

(11) **EP 1 992 223 B1**
(45) Veröffentlichungstag und Bekanntmachung des Hinweises auf die Patenterteilung: **26.05.2010**
(21) Anmeldenummer: 08007531.0
(22) Anmeldetag: 17.04.2008
(51) Int. Cl.: A01L 7/04, A01L 7/06

(54) **Gewindestollen**
Threaded calk
Talon fileté

(30) Priorität: 15.05.2007 DE 102007022768
(43) Veröffentlichungstag der Anmeldung: 19.11.2008
(73) Patentinhaber: GEKE Equitec GmbH, 78713 Schramberg (DE)
(72) Erfinder: Kellner, Gerd, 78713 Schramberg (DE); Kellner, Nicoline, 78713 Schramberg (DE)
(74) Vertreter: Söltenfuss, Dirk Christian

(56) Entgegenhaltungen:
- WO-A-2005/082193
- DE-C- 121 645
- GB-A- 293 965
- GB-A- 191 108 230
- US-A- 2 381 177

## Beschreibung

Die vorliegende Erfindung betrifft einen Gewindestollen für Hufeisen nach dem Oberbegriff des Anspruchs 1.

Gewindestollen werden insbesondere zu Turnieren in Hufeisen eingeschraubt, um die Trittsicherheit der Pferde zu erhöhen. Hierbei gibt es verschiedene Gewindestollen mit unterschiedlichen Stollenkörpern an den Kopfabschnitten, die je nach Untergrund zum Erzielen einer optimalen Trittsicherheit ausgewählt werden können.

Ein derartiger Gewindestollen ist zum Beispiel in der DE 199 59 846 A1 offenbart. Der in dieser Druckschrift beschriebene Gewindestollen mit einem konischen Gewindeabschnitt wird zwar als "selbstschneidender Gewindestollen" bezeichnet, er ermöglicht aber in der Praxis durch eine seitliche Einfräsung des Gewindeabschnitts beim Eindrehen in eine entsprechende Gewindebohrung in einem Hufeisen nur ein Freiräumen der bereits vorhandenen Gewindegänge.

Problematisch bei derartigen Gewindestollen ist ihre sichere Befestigung im Hufeisen. Beim Reiten, und hier insbesondere beim Springreiten, treten insbesondere bei Absprung und Landung extrem hohe Belastungen auf die Gewindestollen auf, die zudem in der Regel nicht in der Axialrichtung des Gewindestollens gerichtet sind. Aufgrund der geringen Dicke des Hufeisens verfügen die Gewindestollen aber allenfalls über 2 bis höchstens 4 Gewindegänge, welche bei den hohen auftretenden dynamischen Belastungen für einen dauerhaft sicheren Halt nicht ausreichen. Die Folgen sind ein häufiges Verlieren der Gewindestollen und eine Beschädigung der Gewindebohrungen im Hufeisen. Des Weiteren besteht bei den herkömmlichen Gewindestollen die Gefahr, dass sie beim Eindrehen in eine entsprechende Gewindebohrung in einem Hufeisen bei Anwendung eines zu hohen Drehmoments durch die Gewindebohrung hindurch bis in den Pferdehuf geschraubt werden.

Ein Gewindestollen, der diese Nachteile vermeiden kann und auf dem der Oberbegriff des Anspruchs 1 basiert, ist in der US-A-2,381,177 offenbart. Dieser herkömmliche Gewindestollen ist mit einer Tellerfeder ausgestattet, welche den in ein Hufeisen eingeschraubten Gewindestollen in der entsprechenden Gewindebohrung sichert.

Ferner sind im Stand der Technik auch verschiedene gewindelose Stollen für Hufeisen bekannt, die mit speziellen Klemmmechanismen versehen sind.

So beschreibt die DE 10 2005 037 805 A1 einen gewindelosen Wechselstollen für ein Hufeisen, an dessen zylindrischem Schaft eine Ringnut ausgebildet ist, in der ein Klemmring zum Beispiel in Form eines elastomeren O-Ringes gehalten ist, welcher den Schaft des Stollens in einer entsprechenden zylindrischen Bohrung eines Hufeisens festklemmt. Dieser reine Klemmsitz ist allerdings nicht in der Lage, den hohen dynamischen Belastungen speziell beim Springreiten dauerhaft standzuhalten.

Aus der DE 90 03 985 U1 ist ein gewindeloser Stollen für Hufeisen bekannt, der im Übergangsbereich zwischen Kopfabschnitt und Schaft eine U-förmige Klammer aufweist, deren Schenkel im eingesetzten Zustand des Stollens das Hufeisen zumindest teilweise umgreifen. Diese Anordnung kann ohne zusätzliche Maßnahmen naturgemäß aber nur einen relativ schwachen Halt des Stollens am Hufeisen bewirken.

Die DE 10 2004 026 191 A1 zeigt einen Stollen für ein Hufeisen, an dessen Schaftende eine Ringnut vorgesehen ist, in die eine Haltefeder eingreifen kann. Das Hufeisen ist an seiner dem Pferdehuf zugewandten Seite mit einer Aussparung um die Bohrung versehen, sodass das Schaftende auf der ausgesparten Seite des Hufeisens aus der Bohrung heraus ragt und die Haltefeder zwischen Pferdehuf und Hufeisen eingesetzt werden kann und den Stollen festsetzt. Dieses System erfordert jedoch eine Modifikation des Hufeisens und ein zusätzliches Bauteil in Form der Haltefeder und bewirkt dennoch keine ausreichend sichere Befestigung des Stollens im Hufeisen.

Schließlich offenbart die DE 296 11 252 U1 eine Hufeisenanordnung, bei welcher in eine Bohrung des Hufeisens zunächst ein Befestigungselement mit einem Hohlzapfen eingesetzt wird und dann erst der Stollen mit seinem Gewindeschaft in den Hohlzapfen des Befestigungselements eingeschraubt wird, wodurch der Hohlzapfen eine Spreizbefestigung in der Hufeisenöffnung erfährt. Trotz des aufwändigen Aufbaus mit dem zusätzlichen Befestigungselement kann auch bei dieser Anordnung nur eine ungenügende Klemmverbindung erzielt werden.

Der Erfindung liegt die Aufgabe zugrunde, einen verbesserten Gewindestollen für Hufeisen zu schaffen, der auch bei hohen dynamischen Belastungen sicher im Hufeisen befestigt ist.

Diese Aufgabe wird gelöst durch einen Gewindestollen mit den Merkmalen des Anspruchs 1. Vorteilhafte Ausgestaltungen und Weiterbildungen der Erfindung sind Gegenstand der abhängigen Ansprüche.

Der Gewindestollen weist einen Kopfabschnitt, der zum Greifen durch ein entsprechendes Werkzeug ausgebildet ist, und einen Gewindeabschnitt, der zum Eindrehen in eine entsprechende Gewindebohrung in einem Hufeisen ausgebildet ist, auf. Zusätzlich ist zwischen dem Gewindeabschnitt und dem Kopfabschnitt eine Tellerfeder vorgesehen, wobei die konkave Seite der Tellerfeder dem Gewindeabschnitt zugewandt ist und der Außendurchmesser der Tellerfeder größer ist als der Außendurchmesser des Gewindeabschnitts. Diese Tellerfeder ist integral mit dem Kopfabschnitt und dem Gewindeabschnitt ausgebildet.

Beim Eindrehen des so ausgebildeten Gewindestollens in eine Gewindebohrung eines Hufeisens stützt sich der Außenumfang der Tellerfeder gegen das Hufeisen ab und wird die Tellerfeder gespannt. Die hohen dynamischen Belastungen werden daher nicht mehr durch das Gewinde, sondern durch die Tellerfeder aufgenommen, welche bei entsprechender Auslegung für derart hohe Belastungen geeignet ist. Die Tellerfeder bewirkt daher eine Sicherung des Gewindestollens in der Gewindebohrung, die auch extrem hohen dynamischen Belastungen standhalten kann. Durch die Tellerfeder, deren Außendurchmesser größer ist als jener des Gewindeabschnitts, wird außerdem wirksam verhindert, dass der Gewindestollen zu tief in eine Gewindebohrung eines Hufeisens eingedreht wird und gegebenenfalls sogar den Pferdehuf verletzt. Durch die integrale Ausbildung der Tellerfeder mit dem Gewindestollen ist diese verliersicher.

Die Tellerfeder weist an ihrer dem Gewindeabschnitt zugewandten Seite wenigstens eine Erhebung auf. Diese Erhebung bildet eine Verzahnung, die bei angezogenem Gewindestollen in die Oberfläche des Hufeisens eingedrückt wird und damit eine Verdrehsicherung für den Gewindestollen bildet. Dies erhöht die Verliersicherheit des Gewindestollens weiter.

Vorzugsweise besitzt die Tellerfeder einen Außendurchmesser, der im Wesentlichen der Breite eines Hufeisens entspricht, sodass sich der Außenumfang der Tellerfeder gegen das Hufeisen abstützen kann.

Der Gewindeabschnitt des Gewindestollens kann wahlweise ein normales Gewinde, ein Räumgewinde zum Freiräumen der Gewindegänge der Gewindebohrung im Hufeisen oder ein Schneidgewinde zum Nachschneiden der Gewindegänge der Gewindebohrung im Hufeisen oder auch eine Kombination dieser Gewindearten aufweisen. Außerdem ist der Gewindeabschnitt im Gegensatz zu den eingangs beschriebenen herkömmlichen Gewindestollen vorzugsweise aus einem im Wesentlichen zylindrischen Gewindekörper gebildet, wodurch die Herstellung vereinfacht ist.

In einer bevorzugten Ausgestaltung der Erfindung ist der Gewindestollen aus einem härtbaren Stahl gefertigt, dessen Härte vorzugsweise im Bereich von etwa 45 bis 55 HRC (Rockwellhärte) liegt, sodass sich das Gewinde des Gewindeabschnitts in das weichere Material des Hufeisens eindrehen kann.

Der Kopfabschnitt des Gewindestollens kann ferner mit einem Stollenkörper beliebiger Art ausgebildet sein.

Obige sowie weitere Merkmale und Vorteile der Erfindung werden aus der nachfolgenden Beschreibung bevorzugter, nicht-einschränkender Ausführungsbeispiele unter Bezugnahme auf die beiliegenden Zeichnungen besser verständlich. Darin zeigen:
- Fig. 1: eine Seitenansicht eines Gewindestollens gemäß einem ersten bevorzugten Ausführungsbeispiel;
- Fig. 2: eine Seitenansicht eines Gewindestollens gemäß einem zweiten bevorzugten Ausführungsbeispiel; und
- Fig. 3: eine Seitenansicht eines Gewindestollens gemäß einem Vergleichsbeispiel, das nicht ein Teil der Erfindung ist.

### (Erstes Ausführungsbeispiel)

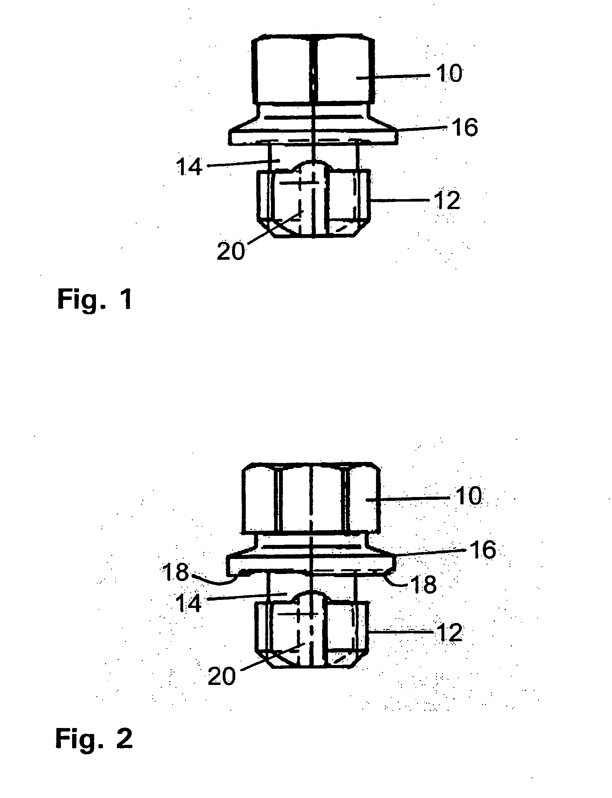

Bezug nehmend auf Fig. 1 wird nun zunächst ein erstes bevorzugtes Ausführungsbeispiel eines Gewindestollens beschrieben.

Der Gewindestollen besteht aus einem Kopfabschnitt 10 und einem Gewindeabschnitt 12, die über einen Halsabschnitt 14 mit kleinerem Außendurchmesser integral miteinander verbunden sind. Kopfabschnitt 10, Gewindeabschnitt 12 und Halsabschnitt 14 sind aus einem härtbaren Stahl gefertigt, der vorzugsweise eine Härte im Bereich von 45 bis 55 HRC (Rockwell-Härte), am bevorzugtesten von etwa 50 HRC aufweist, ohne dass die Erfindung auf diese Zahlenwerte beschränkt sein soll. Die angegebenen Härten gewährleisten noch eine gewisse Elastizität des Gewindestollens, sind aber deutlich größer als jene von üblichen Hufeisen.

Der Kopfabschnitt 10 ist derart ausgebildet, dass er durch ein entsprechendes Werkzeug gegriffen werden kann. Beispielsweise ist der Kopfabschnitt mit einem Sechskant-Querschnitt ausgebildet, der durch einen Schraubenschlüssel oder dergleichen Werkzeug gegriffen werden kann. Eine geeignete Querschnittsgröße für den Kopfabschnitt 10 sind Schlüsselweiten von 13 bis 17 mm. Zusätzlich kann der Kopfabschnitt 10 auf seiner dem Gewindeabschnitt 12 abgewandten Seite noch mit einem Stollenkörper versehen sein. Hierbei sind im Rahmen der Erfindung beliebige Stollenkörper (insbesondere verschiedene Kegelformen) verwendbar, wie sie dem Fachmann auf dem Gebiet des Pferdesports bekannt sind.

Der Gewindeabschnitt 12 ist vorzugsweise aus einem im Wesentlichen zylindrischen Gewindekörper (Standardgewinde) gebildet und ist mit einem Gewinde versehen, das in eine entsprechende Gewindebohrung eines Hufeisens eingedreht werden kann. Das Gewinde hat zum Beispiel eine Größe von M10, M12 oder 3/8 und besitzt auf eine Länge von etwa 7 mm bis 9 mm etwa 3 bis 5 Gewindegänge. Die Gesamthöhe des Gewindestollens, wie er in Fig. 1 veranschaulicht ist, beträgt zum Beispiel etwa 22 mm.

Wie in Fig. 1 angedeutet, weist der Gewindeabschnitt 12 wenigstens eine achsparallele Vertiefung 20 auf, die sich über die gesamte Gewindehöhe erstreckt. Diese Vertiefung dient als Schmutzauswurf beim Eindrehen des Gewindes in eine Gewindebohrung eines Hufeisens (Räumgewinde). Das Gewinde des Gewindeabschnitts 12 kann alternativ aber auch als ein einfaches Gewinde bzw. alternativ oder zusätzlich als ein Schneidgewinde zum Nachschneiden der Gewindegänge der Gewindebohrungen im Hufeisen ausgebildet sein.

Wie in Fig. 1 dargestellt, ist zwischen dem Kopfabschnitt 10 und dem Gewindeabschnitt 12 eine Tellerfeder 16 vorgesehen, wobei die Tellerfeder 16 integral mit dem Kopfabschnitt 10, dem Halsabschnitt 14 und dem Gewindeabschnitt 12 - und damit verliersicher - ausgebildet ist. Die konkave, d.h. die nach innen gewölbte Seite der Tellerfeder 16 ist dabei dem Gewindeabschnitt 12 zugewandt. Der Außendurchmesser der Tellerfeder 16 ist größer bemessen als der Außendurchmesser des Gewindeabschnitts 12 und ist im Wesentlich gleich der Breite eines Hufeisens gewählt. Auf diese Weise kann sich der den Gewindeabschnitt 12 in radialer Richtung überragende Außenumfang der Tellerfeder 16 gegen das Hufeisen abstützen. Der Außendurchmesser der Tellerfeder beträgt zum Beispiel etwa 18 mm, ohne dass die Erfindung auf diesen Wert beschränkt ist. Die Tellerfeder 16 kann außerdem auch etwas kleiner oder etwas größer als die Breite eines Hufeisens bemessen sein.

Der Gewindestollen wird vorzugsweise mit einem Drehmoment im Bereich von etwa 15 bis 20 Nm oder sogar bis 35 Nm in einer Gewindebohrung eines Hufeisens angezogen. Das angegebene Drehmoment genügt, um den Gewindestollen sicher am Hufeisen zu befestigen, ein höheres Drehmoment (ab etwa 40 Nm) würde das Gewinde andererseits aus dem Hufeisen herausziehen und die Gewindebohrung des Hufeisens beschädigen. Versuche mit einer aktuellen Ausführungsform der erfindungsgemäßen Gewindestollen haben gezeigt, dass ein Drehmoment von etwa 25 Nm sowohl zum Anziehen als auch zum Lösen des Gewindestollens optimal ist. Die Tellerfeder 16 mit dem größeren Außendurchmesser verhindert zudem effizient, dass der Gewindestollen zu tief in die Gewindebohrung des Hufeisens eingedreht werden kann und so evt. den Pferdehuf verletzt.

Versuche haben weiter gezeigt, dass ein derartiger Gewindestollen den hohen dynamischen Belastungen, wie sie insbesondere beim Absprung oder bei der Landung eines Pferdes auftreten, standhält und der Gewindestollen sicher im Hufeisen gehalten wird. Bei eingedrehtem Gewindestollen stützt sich die Tellerfeder 16 mit ihrem Außenumfang gegen das Hufeisen ab und wird gespannt, sodass die hohen dynamischen Belastungen nicht vom Gewinde des Gewindeabschnitts 12 aufgenommen werden müssen, sondern durch die Tellerfeder 16 abgefangen werden. Es ist bekannt, dass Tellerfedern 16 aufgrund ihrer Bauweise gerade für hohe dynamische Belastungen geeignet sind. Als ein weiterer Vorteil bewirkt die Tellerfeder 16 zudem einen gewissen Puffereffekt bei Stoßbelastungen.

### (Zweites Ausführungsbeispiel)

Ein zweites bevorzugtes Ausführungsbeispiel eines Gewindestollens wird nun Bezug nehmend auf Fig. 2 näher erläutert.

Der Gewindestollen des zweiten Ausführungsbeispiels unterscheidet sich von dem in Fig. 1 dargestellten Gewindestollen darin, dass an der dem Gewindeabschnitt 12 bzw. dem Hufeisen zugewandten Seite der Tellerfeder 16 wenigstens eine Erhebung 18 ausgebildet ist. Die vorzugsweise mehreren Erhebungen sind insbesondere entlang des Außenumfangs der Tellerfeder 16 vorgesehen. Wenn der Gewindestollen in eine Gewindebohrung eines Hufeisens eingedreht und die Tellerfeder 16 gespannt wird, werden diese Erhebungen 18 in die Oberfläche des Hufeisens eingedrückt und wirken so als Verdrehsicherung. Dies verstärkt die Befestigung des Gewindestollens am Hufeisen weiter.

Die übrigen Merkmale und Vorteile des Gewindestollens von Fig. 2 sind gleich jenen des obigen ersten Ausführungsbeispiels, weshalb auf ihre nochmaligen Erläuterungen verzichtet wird.

### (Vergleichsbeispiel das nicht ein Teil der Erfindung ist )

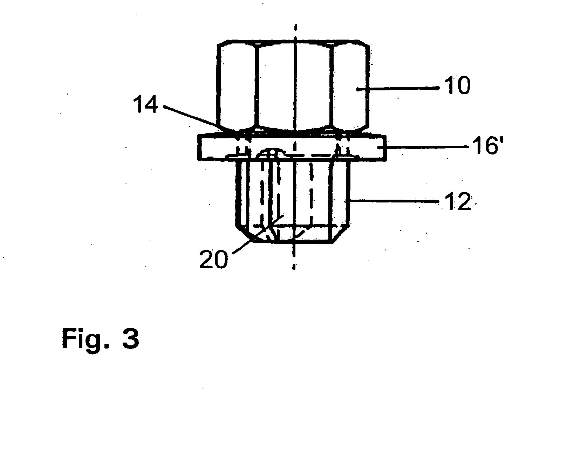

Es wird nun unter Bezug auf Fig. 3 ein weiterer Gewindestollen als Vergleichsbeispiel erläutert.

Der in Fig. 3 dargestellte Gewindestollen unterscheidet sich von dem Gewindestollen des obigen ersten Ausführungsbeispiels dahingehend, dass die Tellerfeder 16' nicht integral mit dem Kopfabschnitt 10, dem Gewindeabschnitt 12 und dem verjüngten Halsabschnitt 14 ausgebildet ist, sondern ein von diesen Komponenten separates Bauteil ist. Als Tellerfeder 16' kann in diesem Fall eine Standard-Tellerfeder verwendet werden, deren Innendurchmesser etwas größer als der Außendurchmesser des Halsabschnitts 14 bemessen ist und deren Höhe im entspannten Zustand etwa der Länge des Halsabschnitts 14 entspricht. Die Dicke der Tellerfeder 16' beträgt zum Beispiel etwa 2,5 mm, wobei sie im entspannten Zustand eine Höhe von etwa 3 mm einnimmt.

## Patentansprüche

1. Gewindestollen, mit
einem Kopfabschnitt (10), der zum Greifen durch ein entsprechendes Werkzeug ausgebildet ist;
einem Gewindeabschnitt (12), der zum Eindrehen in eine entsprechende Gewindebohrung in einem Hufeisen ausgebildet ist; und
einer Tellerfeder (16), deren Außendurchmesser größer ist als der Außendurchmesser des Gewindeabschnitts (12), **dadurch gekennzeichnet,**
**dass** die Tellerfeder (16) zwischen dem Gewindeabschnitt (12) und dem Kopfabschnitt (10) vorgesehen ist, wobei die konkave Seite der Tellerfeder (16) dem Gewindeabschnitt (12) zugewandt ist, und
**dass** die Tellerfeder (16) integral mit dem Kopfabschnitt (10) und dem Gewindeabschnitt (12) ausgebildet ist.

2. Gewindestollen nach Anspruch 1,
**dadurch gekennzeichnet,**
**dass** die Tellerfeder (16) an ihrer dem Gewindeabschnitt (12) zugewandten Seite wenigstens eine Erhebung (18) aufweist.

3. Gewindestollen nach Anspruch 1 oder 2,
**dadurch gekennzeichnet,**
**dass** die Tellerfeder (16) einen Außendurchmesser besitzt, der im Wesentlichen der Breite eines Hufeisens entspricht.

4. Gewindestollen nach einem der Ansprüche 1 bis 3,
**dadurch gekennzeichnet,**
**dass** der Gewindeabschnitt (12) ein Gewinde, ein Räumgewinde oder ein Schneidgewinde aufweist.

5. Gewindestollen nach einem der Ansprüche 1 bis 4,
**dadurch gekennzeichnet,**
**dass** der Gewindeabschnitt (12) aus einem im Wesentlichen zylindrischen Gewindekörper gebildet ist.

6. Gewindestollen nach einem der Ansprüche 1 bis 5,
**dadurch gekennzeichnet,**
**dass** der Gewindestollen aus einem härtbaren Stahl gefertigt ist.

7. Gewindestollen nach Anspruch 6,
**dadurch gekennzeichnet,**
**dass** der Gewindestollen eine Härte im Bereich von etwa 45 bis 55 HRC besitzt.

8. Gewindestollen nach einem der Ansprüche 1 bis 7,
**dadurch gekennzeichnet,**
**dass** der Kopfabschnitt (10) mit einem Stollenkörper ausgebildet ist.

## Claims

1. Threaded calk, having a head section (10), which is constructed to be gripped by a corresponding tool; a threaded section (12), which is constructed to be screwed into a corresponding tapped hole in a horseshoe; and a disk spring (16), the outside diameter of which is greater than the outside diameter of the threaded section (12),
**characterised in that**
the disk spring (16) is provided between the threaded section (12) and the head section (10), the concave side of the disk spring (16) facing towards the threaded section (12), and
the disk spring (16) is integrally formed with the head section (10) and the threaded section (12).

2. Threaded calk according to Claim 1, **characterised in that** the disk spring (16) has at least one elevation (18) on its side facing the threaded section (12).

3. Threaded calk according to Claim 1 or 2, **characterised in that** the disk spring (16) has an outside diameter which substantially corresponds to the width of a horseshoe.

4. Threaded calk according to any one of Claims 1 to 3, **characterised in that** the threaded section (12) comprises a thread, a broaching thread or a tapping thread.

5. Threaded calk according to any one of Claims 1 to 4, **characterised in that** the threaded section (12) is formed from a substantially cylindrical thread body.

6. Threaded calk according to any one of Claims 1 to 5, **characterised in that** the threaded calk is made from a hardenable steel.

7. Threaded calk according to Claim 6, **characterised in that** threaded calk has a hardness in the range of approximately from 45 to 55 HRC.

8. Threaded calk according to any one of Claims 1 to 7, **characterised in that** the head section (10) is formed with a calk body.

## Revendications

1. Crampon à vis possédant une tête (10) dont la forme permet d'être saisie par un outil correspondant, une partie filetée (12) destinée à être vissée dans le trou fileté d'un fer à cheval, et une rondelle ressort (16) dont le diamètre est supérieur au diamètre extérieur de la partie filetée (12),
**caractérisé en ce que** la rondelle ressort (16) est disposée entre la partie filetée (12) et la tête (10), que la face concave de la rondelle ressort (16) est orientée face à la partie filetée (12) et que la rondelle ressort (16) est une partie intégrale de la tête (10) et de la partie filetée (12).

2. Crampon à vis suivant la revendication 1, **caractérisé en ce que** la rondelle ressort (16) possède sur la face côté partie filetée (12) au moins un bossage (18).

3. Crampon à vis suivant la revendication 1 ou 2, **caractérisé en ce que** le diamètre extérieur de la rondelle ressort (16) possède à peu près la largeur d'un fer à cheval.

4. Crampon à vis suivant les revendications 1 à 3, **caractérisé en ce que** la partie filetée (12) possède un filetage ordinaire, un filetage à déboucher ou un filetage à tarauder.

5. Crampon à vis suivant une des revendications 1 à 4, **caractérisé en ce que** la partie filetée (12) est constituée d'un corps fileté essentiellement cylindrique.

6. Crampon à vis suivant une des revendications 1 à 5, **caractérisé en ce que** le crampon à vis est réalisé dans un acier apte au traitement de trempe.

7. Crampon à vis suivant la revendication 6, **caractérisé en ce que** le crampon a une dureté dans une plage de 45 à 55 HRC environ.

8. Crampon à vis suivant une des revendications 1 à 7, **caractérisé en ce que** la tête (10) est pourvue d'un corps crampon.
